# EUROPÄISCHE PATENTSCHRIFT

(11) **EP 0 608 676 B1**
(45) Veröffentlichungstag und Bekanntmachung des Hinweises auf die Patenterteilung: **09.04.1997**
(21) Anmeldenummer: 93890009.9
(22) Anmeldetag: 26.01.1993
(51) Int. Cl.: G01L 3/24, G01M 15/00

(54) **Verfahren und Messanordnung zur Bestimmung von Betriebsdaten einer Brennkraftmaschine**
Method and measuring arrangement for determining operating data of a combustion engine
Procédé et arrangement de mesure pour déterminer des caractéristiques de fonctionnement d'un moteur à combustion

(43) Veröffentlichungstag der Anmeldung: 03.08.1994
(73) Patentinhaber: AVL List GmbH, 8020 Graz (AT)
(72) Erfinder: Gazzari, Remigio, Dipl.-Ing., A-8111 Judendorf/Strassengel (AT); Koegeler, Hans-Michael, Dipl.-Ing., A-8010 Graz (AT); Kunzfeld, Wilhelm, A-8010 Graz (AT); Sailer, Gerhard, A-8053 Graz (AT)
(74) Vertreter: Klein, Adam, Dipl.Ing.

(56) Entgegenhaltungen:
- EP-A- 0 464 822

## Beschreibung

Die Erfindung betrifft ein Verfahren zur Bestimmung von Betriebsdaten, insbesonders der Leistung und des Drehmomentenverlaufes, einer mittels Abgasturbolader aufgeladenen Brennkraftmaschine, wobei im freien Vollasthochlauf fortlaufend die Drehzahl ermittelt und aus dem Drehzahlverlauf und bekannten Daten, insbesonders dem Trägheitsmoment, die Betriebsdaten, insbesonders die Leistung und der Drehmomentenverlauf, bestimmt werden und wobei der Abgasturbolader vor der freien Hochlaufphase beschleunigt wird. Weiters betrifft die Erfindung auch Ausgestaltungen einer Meßanordnung zur Durchführung eines derartigen Verfahrens.

Es gibt Werkstattmeßgeräte (z.B. das als "AVL 845" bekannte Gerät der Anmelderin), die die Motorleistung und den Drehmomentenverlauf allein aus einer fortlaufenden Messung der Drehzahl bzw. der Drehzahländerung (Beschleunigung) im freien Vollasthochlauf bestimmen. An konstanten Werten ist lediglich das Motorträgheitsmoment einzugeben. Mit diesen Geräten kann die Motorleistung und der komplette Motordrehmomentenverlauf einer z.B. im Kraftfahrzeug als Antriebsmotor eingebauten Brennkraftmaschine innerhalb weniger Sekunden mit einer einfachen Meßprozedur bestimmt werden, und zwar ohne Motorausbau und ohne zeitaufwendiges Montieren des Motors auf einem Motorprüfstand. Es ist dafür auch kein teurer und platzraubender Rollenprüfstand oder dergleichen erforderlich auf den das Fahrzeug mit erheblichem Zeitaufwand aufgespannt werden muß. Außerdem erhält man in kürzester Zeit einen kompletten Motordrehmomentenverlauf, während auf einem Rollenprüfstand nur die Leistung am Radumfang - also die Motorleistung abzüglich (meist unbekannter) Antriebsstrang- und Rad/Rollen-Verluste - mit wesentlich mehr Zeitaufwand gemessen wird. Weiters wird auch keine eigene Bremseinrichtung benötigt, die intrusiv an den Antriebsstrang des Fahrzeuges angekoppelt werden muß.

Trotz dieser großen Vorteile, die das Hochlauf-Leistungsmeßverfahren bietet, ist es nicht in der Lage, das Leistungsvermögen von aufgeladenen Motoren zu bestimmen. Der Vorgang der freien Beschleunigung ist nämlich so rasch, daß das Aufladesystem von turbogeladenen Brennkraftmaschinen den Ladedruck, der sich bei hoher Last im stationären Zustand einstellt, grundsätzlich nicht bereitstellen kann. In Folge des resultierenden Luftmangels wird weiters von den dafür vorgesehenen Elementen der Einspritzausrüstung (z.B. LDA, Motor-Management) die Einspritzmenge derart reduziert, daß der Motor in der freien Beschleunigung nur etwa die Hälfte seines stationär erreichbaren Drehmoments liefert. Die Methode ist also zur Leistungs- bzw. Drehmomentmessung an turbogeladenen Brennkraftmaschinen nur sehr bedingt einsetzbar. Dementsprechend sind auch die anderen in der freien Beschleunigung bestimmten Motormeßgrößen (z.B. Ladedruck oder Rauchstoß) gegenüber einer Straßenmessung verfälscht und wenig repräsentativ.

Um diesem Mangel entgegenzuwirken, schlagen Cuniberti et al in EP 0464822 A1 vor, den Turbolader mittels einer eigens angesteuerten Preßlufteinrichtung auf eine vorbestimmte Drehzahl zu bringen, bevor die freie Beschleunigung durchgeführt wird. In der freien Beschleunigung wird dann aus der gemessenen Beschleunigung Drehmoment und Leistung berechnet.

Nachteilig bei dieser bekannten Methode ist aber der erforderliche Umbau des Ansauglufttrakts. Dadurch besteht die Gefahr, daß Schmutzteilchen mitangesaugt werden können und damit der Turbokompressor oder der Motor Schaden erleiden könnte. Zusätzlich muß eine großdimensionierte Luftversorgungsanlage bereitgestellt werden. Außerdem ist nicht zu erwarten, daß die dadurch erreichbare Turboladerdrehzahl wesentlich höher sein wird als die Turboladerdrehzahl im gewöhnlichen Leerlauf. Die üblicherweise verwendeten Radialkompressoren nehmen bei höherem Eingangsdruck grundsätzlich ein höheres Drehmoment auf. Es wird daher der Kompressorteil nicht - wie möglicherweise gedacht - durch die Preßluft angetrieben, sodaß er als "Turbine" läuft. Im Gegenteil, der Kompressor wird einen erhöhten Leistungsbedarf aufweisen. Die Abgasturbine wird zwar durch den höheren (z.B. doppelt so hohen) Luftdurchsatz etwas mehr Drehmoment liefern. Dieses Turbinendrehmoment ist etwa mit dem der doppelten Motordrehzahl ohne Motorlast vergleichbar. Mangels der unter stationären Zuständen vorherrschenden höheren Auspufftemperatur ist damit das Antriebsmoment für die Turboladergruppe aber noch viel zu gering, um die unter Last vorherrschende Turboladerdrehzahl auch nur annähernd zu erreichen. Damit muß die Turboladergruppe erst wieder im daran anschließenden Hochlauf beschleunigt werden, sodaß der Hochlauf wieder ohne ordnungsgemäße Turboladerfunktion und zusätzlich mit den verfälschenden Einflüssen einer Fremdaufladung abläuft.

Aufgabe dieser Erfindung ist es, die oben angeführten Nachteile der bekannten Anordnungen und Verfahren bei der Bestimmung von Motormeßwerten von turbogeladenen Brennkraftmaschinen in der freien Beschleunigung zu vermeiden. Und es ist insbesonders der Luftmangel in der freien Vollastbeschleunigung von aufgeladenen Motoren, der so einen Nachteil darstellt, weil er praktisch alle am Motor meßbaren Größen beeinflußt und Motorfehler überdeckt. Es ist daher ein praktikables Verfahren bereitzustellen, mit dem Motormeßwerte auch in der Werkstatt bestimmt werden können und zwar in der Art, daß sie für das Verhalten des Motors auf der Straße repräsentativ sind.

Dazu wird gemäß der Grundidee der Erfindung, wie sie in den unabhängigen Ansprüchen 1 und 6 definiert ist, die Turboladergruppe vor dem eigentlichen Hochlauf in einen Zustand versetzt, wie er unter stationären Verhältnissen unter Last vorherrscht. Das wird erfindungsgemäß dadurch erreicht, daß zur Beschleunigung des Abgasturboladers die Brennkraftmaschine anschließend an eine freie Hochlaufphase durch eine Bremsung in einen Zustand hoher Last bei niedriger Drehzahl gebracht wird, an welchen sich der Meßhochlauf anschließt. Weitere Ausgestaltungen des erfindungsgemäßen Verfahrens bzw. die entsprechenden Ausbildungen und Ausgestaltungen der Meßanordnung sind den abhängigen Ansprüchen 2 bis 4 und 7 zu entnehmen.

Die Brennkraftmaschine wird also vor dem eigentlichen Hochlauf durch eine Bremsung praktisch in einen stationären Vollastzustand bei niedriger Motordrehzahl gebracht. Der Meßhochlauf wird dann vorzugsweise durch die Betätigung des Kupplungspedals ausgelöst. Da die Bremsung nur einige Sekunden lang erforderlich ist, kann sie ohne jeglichen Umbau am Motor oder am Fahrzeug auch mit der Fahrzeugbetriebsbremse durchgeführt werden. Dazu werden bei eingelegtem Gang die Antriebsräder freigestellt - sie werden also zum Beispiel auf frei drehbaren Rollen aufgestützt oder es werden die Antriebsachsen aufgebockt.

Die erfindungsgemäße Meßanordnung unterstützt die Meßprozedur so, daß sie praktisch leicht durchführbar ist.

Im folgenden wird die Erfindung anhand des Beispiels einer Motorleistungsmessung an einem LKW näher beschrieben: Fig. 1 zeigt ein Beispiel für eine Meßanordnung im Blockschaltbild. Fig. 2 zeigt den zeitlichen Verlauf von Drehzahl und Ladedruck. Fig. 3a zeigt den erreichten Ladedruck im Vergleich zum Ladedruck bei einer Messung auf der Straße. Fig. 3b zeigt zum Vergleich den erzielbaren Ladedruck in einem mehrfach wiederholten Hochlauf ohne die erfindungsgemäße Vorbereitung im Vergleich zum Ladedruck aus einer Straßenmessung. Fig. 4 zeigt die erreichten Luftverhältnisse im Vollasthochlauf und im Stationärbetrieb. Fig. 5 zeigt den aus der Beschleunigung ermittelten Drehmomentenverlauf im Vergleich zu stationär ermittelten Werksangaben.

Im folgenden ist vorerst der Ablauf der gesamten Meßprozedur diagrammartig näher beschrieben:

### Meßvorbereitung:

* Fahrzeug warmfahren
* Fahrzeugräder freistellen
* Sensoren anbringen
* Meßgerät einschalten
* Parameter eingeben

### Durchführung der Messung:

* Motor starten, Messung starten
* Hochlaufphase (Gang eingelegt, eingekuppelt)
* Bremsphase
* Meßhochlauf (ausgekuppelt)
* Auslauf
* Meßauswertung und Darstellung der Ergebnisse

### Abschluß der Messung:

* Motor abstellen, Meßgerät ausschalten
* Sensor entfernen
* Freistellung der Fahrzeugräder entfernen

Nachdem bei einem warmgefahrenen Fahrzeug die Antriebsräder freigestellt sind, die gewünschten Sensoren adaptiert sind - in diesem Beispiel Drehzahl und Ladedruck - und das Meßgerät eingeschaltet und gestartet ist, wird in einer ersten Hochlaufphase mit eingelegtem Gang Vollgas gegeben. Dabei wird die Abregeldrehzahl erreicht, und durch die mitrotierenden Antriebsräder besteht nun die Möglichkeit einer kurzzeitigen Motorbelastung mittels einer der fahrzeugeigenen Bremsen. Dafür in Frage kommen sowohl die Handbremse (Feststellbremse), die Betriebsbremse oder ein eventuell vorhandener Retarder, wobei bei der praktischen Durchführung des Verfahrens die Handbremse sich als besonders vorteilhaft erwiesen hat.

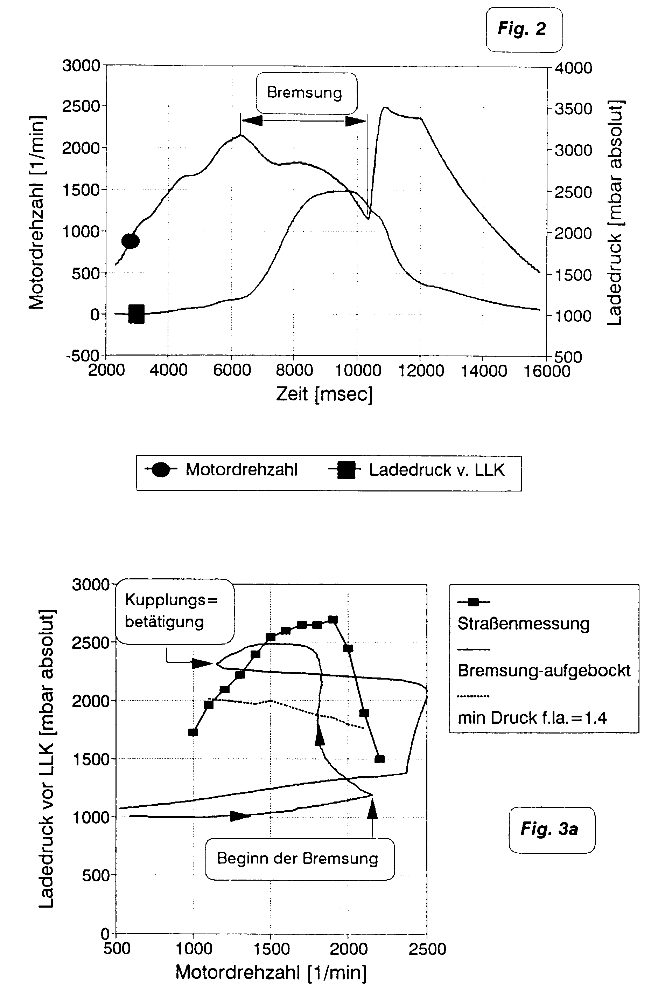

Die Beschreibung der folgenden Phasen wird auch durch den zeitlichen Ablauf von Motordrehzahl und Ladedruck in Fig. 2 unterstützt.

In der nun anschließenden Bremsphase, die zweckmäßigerweise eine gewisse Mindestzeit dauern muß (mindestens 2 Sekunden, beispielsweise 4 Sekunden), bleibt das Gaspedal voll durchgetreten. Während die Motordrehzahl sinkt, gibt der Motor zunehmend Drehmoment ab, die Turboladerdrehzahl und der Ladedruck steigen. Nach der erforderlichen Dauer der Bremsphase und bei einer gewünschten Drehzahl im unteren bis mittleren Drehzahlbereich wird die Bremsphase durch die Betätigung der Kupplung abgeschlossen. Die Drehzahl sollte dabei einerseits so niedrig sein, daß der Beschleunigungsverlauf über ein weites Drehzahlband aufgenommen werden kann. Anderseits darf der aufgebaute Ladedruck durch zu niedrige Drehzahlen nicht wieder abgebaut werden. Als praktikable Drehzahlwerte für den Start des Meßhochlaufes haben sich Werte um 50 bis 60 % der Nenndrehzahl erwiesen.

Das Betätigen der Kupplung löst dann den eigentlichen Vollasthochlauf und den Meßhochlauf aus. Es ist zu betonen, daß hier der Motor alleine gegen sein eigenes Trägheitsmoment hochläuft, wobei aber aufgebauter Ladedruck vorhanden ist. Es wäre grundsätzlich auch möglich, den Meßhochlauf durch Loslassen der Fahrzeugbremse einzuleiten. Das hätte aber den Nachteil, daß üblicherweise unbekannte zusätzliche Parameter bekannt sein müßten (z.B. Getriebeübersetzungen, Räderträgheitsmomente, usw.) und daß Kupplungstorsionsschwingungen die Drehzahlmessung beeinflussen würden. Nach dem Erreichen der Abregeldrehzahl wird das Gaspedal losgelassen, der Motor läuft aus und die Messung wird abgeschlossen. Nach Eingabe etwaiger Konstantwerte - im Beispiel der Motorleistungsmessung nach Eingabe des Motorträgheitsmomentes - können aus dem gemessenen Beschleunigungsverlauf in wohlbekannter Weise das Motordrehmoment und die Motorleistung jeweils als Verlauf über der Drehzahl berechnet werden. Die so bestimmten Werte für Motorleistung und -drehmoment können in weiterer Folge zur Auswertung sonstiger Meßwerte herangezogen werden, beispielsweise zur Bestimmung der Lastabhängigkeit der gleichzeitig gemessenen Abgastrübung.

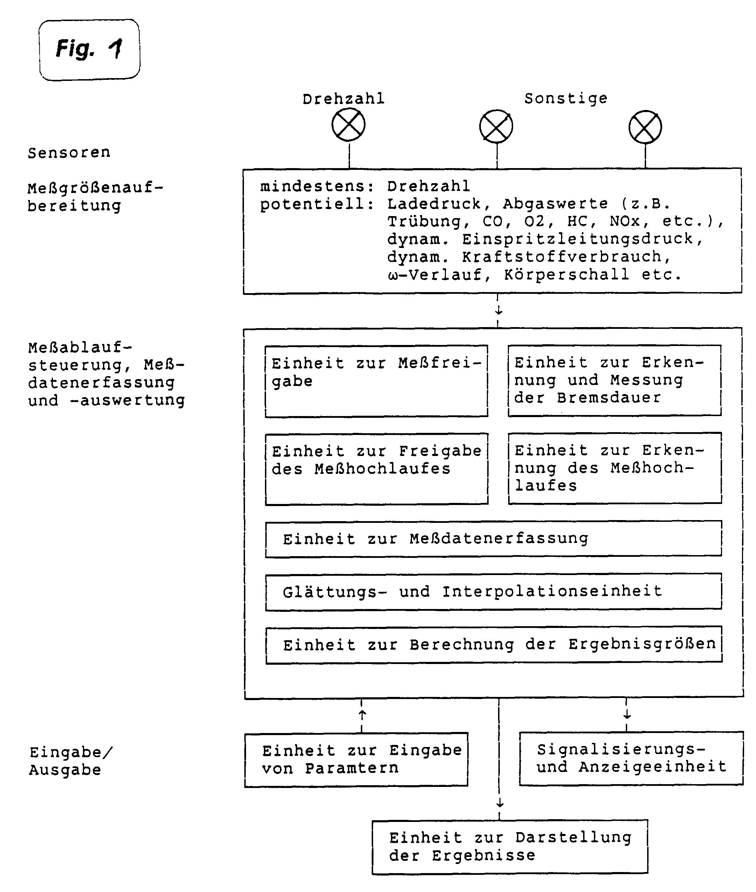

Eine erfindungsgemäße Meßanordnung zur praktischen Durchführung des beschriebenen Verfahrens muß den Benutzer so unterstützen, daß ein fehlerfreier Meßablauf möglich wird. Dazu gehört insbesondere, daß die wesentlichen Bedienungsschritte und Ablaufphasen freigegeben bzw. signalisiert werden, daß z.B. auch Beginn, Ende und Dauer der Bremsphase erkannt und überwacht werden, und daß der eigentliche Hochlauf, der Meßhochlauf, erkannt und die Meßwerte erfaßt und ausgewertet werden. Dies wird in geeigneten Geräteelementen realisiert, die weiter unten (anhand von Fig. 1) beschrieben sind.

In Fig. 3a) wird der Ladedruck von Fig. 2 über der Motordrehzahl dargestellt und einerseits mit dem unter stationären Verhältnissen verglichen. Anderseits ist aber auch der Ladedruck eingetragen, der für ein Luftverhältnis von λ = 1,4 mindestens erforderlich wäre.

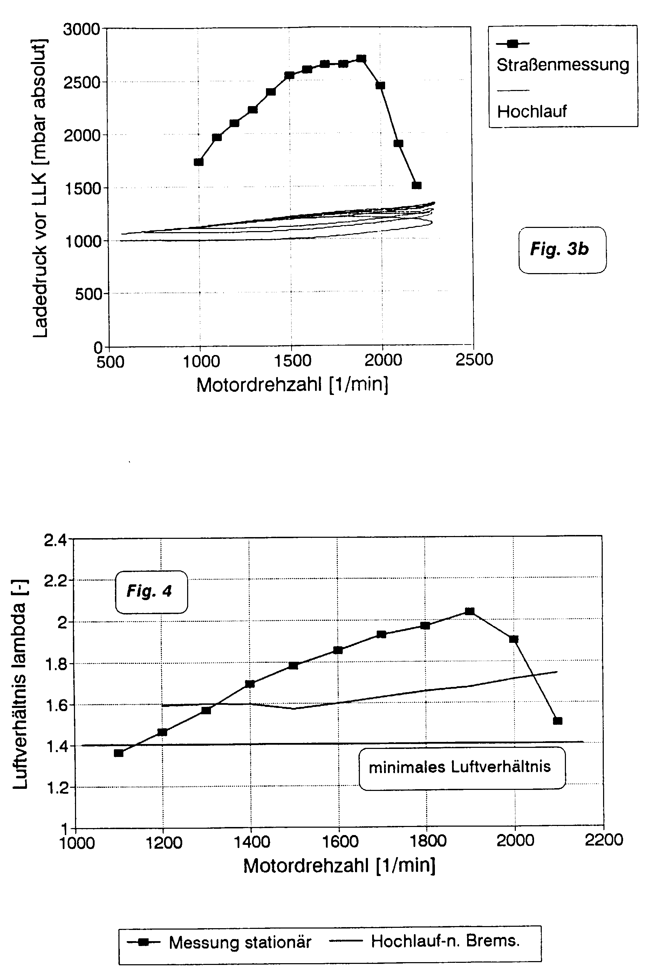

In Fig. 3b) wird der Ladedruckverlauf aus einer gewöhnlichen Vollasthochlaufmessung - ohne die erfindungsgemäße Vorbereitung - mit dem Stationär-Ladedruck verglichen.

Man erkennt nun die Vorteile der Erfindung ganz klar: In der ersten Hochlaufphase nimmt der Ladedruck nur in der Größenordnung zu, wie das auch in einem gewöhnlichen Vollasthochlauf der Fall ist. Mit dem Beginn der Bremsphase baut sich Ladedruck auf, der mit sinkender Drehzahl gemäß der stationären Turboladecharakteristik zwar auch wieder leicht abnimmt; er erreicht aber durch die Dynamik sogar höhere Werte als unter stationären Bedingungen bei dieser niedrigen Drehzahl.

Nach dem Öffnen der Kupplung - während des eigentlichen Meßhochlaufes - sinkt der Ladedruck nur leicht und bleibt deutlich über dem Niveau, das für einen λ-Wert von 1,4 und damit für eine vollständige Verbrennung der gesamten eingespritzten Kraftstoffmenge erforderlich ist.

Während des oberen Leerlaufes nimmt der Ladedruck dann stark ab und zwar etwa auf den typischen Wert für die Abregeldrehzahl. Im Motor-Auslauf verhält sich der Ladedruck dann ähnlich wie in einem gewöhnlichen Hochlauf (vgl. Fig. 3b).

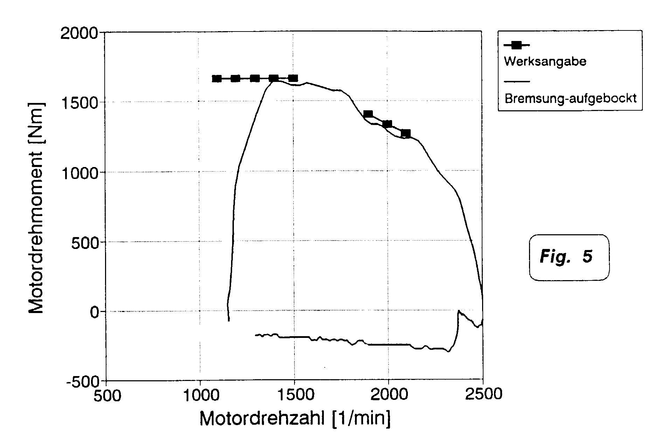

In Fig. 4 wird dargestellt, daß - in diesem Beispiel - mit dieser Methode ein Luftverhältnis von λ = 1,6 und mehr erreicht wurde. Würde in einem gewöhnlichen Hochlauf die volle Kraftstoffmenge eingespritzt, so läge das Luftverhältnis etwa bei 0,7 bis 0.8 was eine unvollständige Verbrennung und einen enormen Rauchstoß zur Folge hätte, wenn dieser nicht durch Elemente des Einspritzsystems (z.B. LDA) verhindert würde. - Durch die entsprechend reduzierte Einspritzmenge war aber bis jetzt das Motorverhalten unter Vollast (Rauchentwicklung, Leistungsvermögen) in der Werkstatt - mit kostengünstigen dynamischen Methoden - praktisch nicht beurteilbar.

Fig. 5 zeigt als ein Beispiel einen Vergleich zwischen den stationären Drehmomentangaben des Herstellers und der aus dem Beschleunigungsverlauf gemessenen Drehmomentkurve.

In Fig. 1 sind schließlich die wesentlichen Elemente einer Meß- bzw. Diagnoseanordnung dargestellt, wie sie zur korrekten Durchführung des erfindungsgemäßen Verfahrens vorgeschlagen wird:

Die zentrale Meßgröße stellt die Motordrehzahl dar. Es ist dabei aber keine besonders hohe Auflösung erforderlich: eine Marke pro Umdrehung ist grundsätzlich ausreichend.

Zur Nutzung für eine detailliertere Motordiagnose kann das Gerät vorteilhafterweise aber auch mit einigen der anderen in der Motordiagnose üblichen Datenerfassungssystem kombiniert werden: z.B. Abgasmeßwerte, Ladedruckmessung, Einspritzleitungsdrucksignale, dynamische Kraftstoffmengenmessung, eine über dem Kurbelwinkel höher aufgelöste Drehzahlmessung (Verlauf der momentanen Drehwinkelgeschwindigkeit ω) zur Beurteilung von Zylinderdruckeffekten, die Messung von Körperschall oder vieles andere mehr. Allen resultierenden Meßergebnissen ist der Vorteil der hier beschriebenen Methode gegenüber einem herkömmlichen "Vollasthochlauf" gemeinsam, daß nun tatsächlich die volle Kraftstoffmenge eingespritzt wird, und zwar mit ausreichend Verbrennungsluft.

Die zentrale Funktion der dargestellten Anordnung besteht daher in der Suche, Erkennung und Auswertung des eigentlichen Meßhochlaufs. Dazu wird die laufend gemessene Motordrehzahl in einer Einheit des Gerätes z.B. dahingehend ausgewertet, daß nach Durchführung der Bremsphase der markante Knick im Drehzahlverlauf, wie er beim Betätigen der Kupplung auftritt, zur Erkennung des Beginns des Meßhochlaufes herangezogen wird. Dieser Knick kann z.B. als Maximum im Verlauf der zweiten zeitlichen Ableitung des Drehzahlverlaufes erkannt werden. Aber auch andere bekannte Verfahren der Signalauswertung können dafür verwendet werden. Die Drehzahlmeßwerte während des Hochlaufes bis zu einer oberen Drehzahlgrenze, im allgemeinen bis zur Abregeldrehzahl bzw. bis zur Abschaltdrehzahl (bei Ottomotoren), werden erfaßt, durch übliche Glättungs- und Interpolationsverfahren von Meßschwankungen befreit und zur Berechnung der Ergebnisgrößen Leistung und/oder Drehmoment ausgewertet. Die Ergebnisse können grafisch dargestellt und Kennwerte wie z.B. Spitzenleistung oder Spitzendrehmoment können angezeigt werden.

Da zum Erreichen eines ausreichend hohen Ladedrucks eine minimale Dauer der Bremsphase erforderlich ist, wird diese in einer Einheit zur Erkennung und Messung der Bremsdauer überprüft. Die Bedienung der Fahrzeugbremse soll nach dem ersten Hochlauf ab einer minimalen Drehzahl, z.B. 90 % der Abregeldrehzahl, erfolgen. Es ist daher zweckmäßig, die Drehzahl analog anzuzeigen und die Freigabe zu signalisieren. Der Beginn der Bremsphase kann an der Drehzahl, bzw. Drehzahländerung erkannt werden, aber auch z.B. am Kontakt des Bremslichtschalters oder am Aufleuchten des Bremslichtes. Auch sonstige Sensoren zur Erkennung der Bremsenbetätigung kommen prinzipiell in Frage, auch wenn der dafür erforderliche Aufwand zur Durchführung des Verfahrens im allgemeinen nicht gerechtfertigt sein wird.

Das Ende der Bremsphase, also das Betätigen der Kupplung, soll erst nach einer Mindestdauer der Bremsphase und bei einer geeigneten mittleren bis niedrigen Drehzahl erfolgen. Es ist daher zweckmäßig, die Freigabe zu signalisieren. Der tatsächliche Zeitpunkt und damit der Beginn des Meßhochlaufs kann an der Drehzahl, bzw. an der Drehzahländerung, erkannt werden, wie oben gesagt wurde. Aber auch Sensoren zur Erkennung der Kupplungsbetätigung kommen dafür in Frage. Wichtig ist, daß die Dauer der Bremsphase bestimmt und durch Vergleich mit der minimal zulässigen Bremsdauer überprüft wird, und daß die Drehzahl zu Ende der Bremsphase im geeigneten Drehzahlbereich liegt.

Die Erfassung der Drehzahldaten vor und während des Meßhochlaufs erfolgt zweckmäßigerweise in einem Ringspeicher ausreichender Tiefe. Ein solcher gewährleistet, daß auch Drehzahldaten von einer gewissen Zeit vor und nach dem Meßhochlauf für die nachfolgende Auswertung zur Verfügung stehen und Unsicherheiten über Beginn und Ende des Meßhochlaufes, wie sie während des Meßablaufs eventuell bestehen können, jedenfalls bei der Auswertung beseitigt werden. Erforderlichenfalls kann dann das Gerät eine Wiederholung der Messung verlangen.

## Patentansprüche

1. Verfahren zur Bestimmung von Betriebsdaten, insbesonders der Leistung und des Drehmomentenverlaufes, einer mittels Abgasturbolader aufgeladenen Brennkraftmaschine, wobei im freien Vollasthochlauf fortlaufend die Drehzahl ermittelt und aus dem Drehzahlverlauf und bekannten Daten, insbesonders dem Trägheitsmoment, die Betriebsdaten, insbesonders die Leistung und der Drehmomentenverlauf, bestimmt werden und wobei der Abgasturbolader vor dem freien Meßhochlauf beschleunigt wird, **dadurch gekennzeichnet**, daß zur Beschleunigung des Abgasturboladers die Brennkraftmaschine anschließend an eine freie Hochlaufphase durch eine Bremsung in einen Zustand hoher Last bei niedriger Drehzahl gebracht wird, an welchen sich der Meßhochlauf anschließt.

2. Verfahren nach Anspruch 1, für eine als Antriebsmotor in einem Fahrzeug dienende Brennkraftmaschine, dadurch gekennzeichnet, daß bei stillstehendem Fahrzeug die Antriebsräder freigestellt werden und daß die Bremsung bei im Fahrzeug eingebaut bleibender Brennkraftmaschine und eingerückter Kupplung mittels einer Betriebsbremse des Fahrzeuges erfolgt.

3. Verfahren nach Anspruch 2, dadurch gekennzeichnet, daß zur Einleitung des freien Meßhochlaufes die Kupplung ausgerückt wird.

4. Verfahren nach einem der Ansprüche 1 bis 3, dadurch gekennzeichnet, daß die Beginn- und/oder Endpunkte der einzelnen Drehzahl- bzw. Lastphasen über eine Anzeigeeinrichtung angezeigt werden.

5. Verfahren nach einem der Ansprüche 1 bis 3, dadurch gekennzeichnet, daß die Beginn- und/oder Endpunkte der einzelnen Drehzahl- bzw. Lastphasen mittels einer Drehzahlüberwachung automatisch festgestellt und zur weiteren Verfahrenssteuerung verwendet werden.

6. Meßanordnung zur Bestimmung von Betriebsdaten einer mittels einer Abgasturbine aufgeladenen Brennkraftmaschine im freien Vollasthochlauf, mit einer Beschleunigungseinrichtung zur Erhöhung der Drehzahl der Abgasturbine vor Beginn des Vollasthochlaufs, sowie mit einer Auswerteeinheit, die mit einem an der Brennkraftmaschine vorgesehenen bzw. anbringbaren Drehzahlsensor verbunden ist, **gekennzeichnet durch**
a) eine mit der Auswerteeinheit in Verbindung stehende Überwachungseinrichtung, um nach Vollgas-Einleitung das Erreichen einer oberen Drehzahlgrenze, insbesonders der Abregeldrehzahl, festzustellen,
b) eine von der Überwachungseinheit über eine Verzögerungseinheit aktivierbare,
c) einen Teil der Beschleunigungseinrichtung bildende Bremseinrichtung zur Anzeige und/oder Einleitung einer Bremsphase unter bleibendem Vollgas, und eine davon aktivierbare
d) Freigabeeinrichtung zur drehzahl- und/oder zeitabhängigen Anzeige und/oder Beendigung der Bremsphase bei bleibendem Vollgas.

7. Meßanordnung nach Anspruch 6 , **gekennzeichnet durch**
e) eine mit der Auswerteeinheit in Verbindung stehende Bremsdauer-Überwachungs- und Aufzeichnungseinheit für die Bremsphase
f) eine ebenfalls mit der Auswerteeinheit in Verbindung stehende Einheit zur Feststellung bzw. Auswertung des drehzahlmäßigen Anfangspunktes des an die Bremsphase anschließenden freien Meßhochlaufes der Brennkraftmaschine, sowie
g) eine Einheit zur Ermittlung und Anzeige bzw. Auswertung des jeweiligen Ladedruckes.

## Claims

1. Method of determining operating data, in particular the power and the torque curve of an internal combustion engine supercharged by means of an exhaust-gas turbocharger, the speed being observed continuously in a free full-load acceleration run and data known from the speed curve, in particular the moment of inertia, the operating data, in particular the power and the torque curve being determined and the turbocharger being accelerated before the free measuring acceleration run, **characterised in that** for accelerating the turbocharger following on a free acceleration phase the engine brought by a braking action into a state of high load at low speed followed by the acceleration measurement.

2. Method according to claim 1, for an internal combustion engine serving as the motive power in a vehicle, **characterised in that** with the vehicle stationary the driving wheels are made free to rotate and that the braking takes place with the engine remaining installed in the vehicle and with the clutch engaged, by means of a service brake of the vehicle.

3. Method according to claim 2, characterised in that the clutch is disengaged to introduce the free acceleration measuring run.

4. Method according to one of claim 1 to 3, characterised in that the start or end of the individual speed and load phases are signalled through a display device.

5. Method according to one of claim 1 to 3, characterised in that the start and/or end of the individual speed and load phases are determined automatically by monitoring the speed and employed for further process control.

6. Measuring equipment for determining operating data of an internal combustion engine supercharged by means of an exhaust gas turbine in a free full-load acceleration run, with an accelerating device for increasing the speed of the exhaust gas turbine before the start of the full-load acceleration run as well as with an evaluating unit which is connected to a speed sensor provided on the engine or capable of mounting on it, **characterised by**
a) a monitoring device connected to the evaluating unit in order to determine, after a full throttle introduction, the attainment of an upper speed limit in particular the governed speed,
b) a braking device activated by the monitoring unit through a delay unit,
c) and forming part of the acceleration device for displaying and/or introducing a braking phase with continuing full throttle and, actuated by it,
d) a release device for displaying dependent on speed and/or time and/or terminating the braking phase whilst full throttle is maintained.

7. Measuring equipment according to claim 6, **characterised by**
e) a brake-period duration-monitoring, and indicating unit for the braking phase connected to the evaluating unit
f) a unit likewise connected to the evaluating unit for determining and evaluating the speed-dependent starting point of the free measuring acceleration run of the engine following the braking phase, as well as
g) a unit for determining and displaying or evaluating the current boost pressure.

## Revendications

1. Procédé de détermination des caractéristiques de fonctionnement, en particulier de la puissance et de l'allure du couple, d'un moteur à combustion interne suralimenté au moyen d'un turbocompresseur entraîné par les gaz d'échappement, dans lequel, en fonctionnement à pleine vitesse et à pleine charge, on détermine en continu la vitesse de rotation et, à partir de l'allure de la vitesse de rotation et de caractéristiques connues, en particulier du moment d'inertie, on détermine les caractéristiques de fonctionnement, en particulier la puissance et l'allure du couple, et dans lequel le turbocompresseur de suralimentation entraîné par les gaz d'échappement et accéléré avant le fonctionnement à vitesse de rotation élevée à vide destiné aux mesures, caractérisé en ce que, pour obtenir l'accélération du turbocompresseur de suralimentation entraîné par les gaz d'échappement, le moteur a combustion interne est ensuite amené dans une phase de fonctionnement à vitesse de rotation élevée à vide puis, par un freinage, est amené dans un état de charge élevé à vitesse de rotation faible, auquel fait suite le fonctionnement à vitesse de rotation élevée pour les mesures.

2. Procédé selon la revendication 1, pour un moteur à combustion interne servant de moteur de propulsion dans un véhicule, caractérisé en ce que, lorsque le véhicule est à l'arrêt, les roues motrices sont libérées et en ce que le freinage s'effectue alors que le moteur à combustion interne reste intégré dans le véhicule et que l'embrayage est embrayé, en freinant au moyen d'un frein de service du véhicule.

3. Procédé selon la revendication 2, caractérisé en ce que pour lancer le fonctionnement pour la mesure à vide à vitesse élevée, on débraye l'embrayage.

4. Procédé selon l'une des revendications 1 à 3, caractérisé en ce que les points initiaux et/ou finaux des différentes phases de vitesse de rotation, ou de charge, sont affichés par l'intermédiaire d'un dispositif d'affichage.

5. Procédé selon l'une des revendications 1 à 3, caractérisé en ce que les points initiaux et/ou finaux des différentes phases de vitesse de rotation, ou de charge, sont fixés automatiquement au moyen d'un contrôle de vitesse de rotation et sont utilisés pour la suite de la commande du procédé.

6. Dispositif de mesure pour déterminer les caractéristiques de fonctionnement d'un moteur à combustion interne suralimenté au moyen d'une turbine entraînée par les gaz d'échappement, en fonctionnement à vitesse élevée et à plein charge, avec un organe d'accélération destiné à augmenter la vitesse de rotation de la turbine entraînée par les gaz d'échappement, avant le début du fonctionnement à vitesse élevée et à pleine charge, ainsi qu'avec une unité d'évaluation qui est reliée à un capteur de vitesse de rotation, prévu ou susceptible d'être monté sur le moteur à combustion interne, caractérisé par :
a) un organe de surveillance, relié à l'unité d'évaluation, afin de déterminer, après mise en oeuvre de la marche à plein gaz, l'atteinte d'une limite supérieure de vitesse de rotation, en particulier de la vitesse de coupure d'injection ou de carburant,
b) un organe de freinage, susceptible d'être actionné par l'unité de surveillance, par l'intermédiaire d'une unité de retardement,
c) l'organe de freinage, constituant une partie de l'organe d'accélération, pour indiquer et/ou lancer une phase de freinage tout en restant à plein gaz, et
d) un organe de libération, susceptible d'être actionné pour indiquer et/ou achever, en fonction de la vitesse de rotation et/ou du temps, la phase de freinage lorsque l'accélération du moteur reste à plein gaz.

7. Dispositif de mesure selon la revendication 6, caractérisé par :
e) une unité de surveillance et d'enregistrement de la durée de freinage, reliée à l'unité d'évaluation, pour appréhender la phase de freinage
f) une unité, également reliée à l'unité d'évaluation, pour déterminer ou évaluer le point initial, quant à la vitesse de rotation, du fonctionnement à vitesse élevée pour la mesure, à vide, subséquent à la phase de freinage, du moteur à combustion interne, ainsi qu'
g) une unité de détermination et d'affichage, ou d'évaluation de la pression de suralimentation respective.
